(19) Europäisches Patentamt
European Patent Office
Office européen des brevets

(11) **EP 1 601 120 A1**

(12) **EUROPÄISCHE PATENTANMELDUNG**

(43) Veröffentlichungstag:
**30.11.2005 Patentblatt 2005/48**

(51) Int Cl.⁷: **H04B 7/08**

(21) Anmeldenummer: **05008724.6**

(22) Anmeldetag: **21.04.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(30) Priorität: **25.05.2004 DE 102004026071**

(71) Anmelder: **Micronas GmbH
79108 Freiburg (DE)**

(72) Erfinder: **Keller, Stefan, Dipl.-Ing.
79106 Freiburg (DE)**

(74) Vertreter: **Göhring, Robert
Westphal - Mussgnug & Partner
Patentanwälte
Am Riettor 5
78048 Villingen-Schwenningen (DE)**

(54) **Verfahren und Vorrichtung zum Verarbeiten empfangener Daten einer Funkschnittstelle**

(57) Die Erfindung bezieht sich auf ein Verfahren zum Verarbeiten empfangener Daten (I1/Q1, I2/Q2; d1, d2) einer Funkschnittstelle, wobei die empfangenen Daten aus einer Folge aus Daten bestehen, die zur Fehlerreduzierung über verschiedene Zweige eines Trägers ($R_k$) der Funkschnittstelle übertragen wurden und zu einer auszugebenden Folge aus Daten (DATAOUT) zu kombinieren sind, wobei das Kombinieren auf Basis von Trägerinformationen ($R_{eq,k}$, $SINR_k$) der verschiedenen Zweige (k) relativ zueinander durchgeführt wird. Vorteilhafterweise wird dabei eine Maximalverhältniskombination (MRC) durchgeführt, bei welcher die Amplituden der Zweige der Trägerinformation ($R_{eq,1}$, $R_{eq,2}$) abhängig von einer Störinformation (MIX, SINR1, SINR2) der Zweige (k) unter Einsatz eines Divisionsverfahrens kombiniert werden.

Fig. 2

**Beschreibung**

Die Erfindung bezieht sich auf ein Verfahren zum Verarbeiten empfangener Daten einer Funkschnittstelle mit den oberbegrifflichen Merkmalen des Patentanspruchs 1 bzw. auf eine Vorrichtung zum Durchführen eines solchen Verfahrens.

Während der Übertragung von Signalen bzw. Daten über eine Funkschnittstelle mit Mehrwege-Kanälen, welche Fading, d. h. einer Abschwächung, unterliegen, werden insbesondere stark gedämpfte Träger (deep fades) durch überlagerte Fehler gestört. Zur Vermeidung oder Reduzierung von Fehlern werden Diversitätstechniken verwendet, die auf der Grundlage einer Verwendung unabhängiger Kanäle beruhen, da die geringe Wahrscheinlichkeit, dass alle Kanäle gleichzeitigem Fading unterliegen, das Empfangen fehlerfreier Daten oder rekonstruierbarer Daten deutlich erhöht. Die verschiedenen Diversitätstechniken dienen dazu, auf verschiedene Art und Weise unabhängige Kanäle bereitzustellen. Diversität verbessert das erforderliche Signal/Rausch-Verhältnis (SNR) für eine vorgegebene Bit-Fehlerrate (BER) deutlich und ermöglicht eine sehr viel höhere zeitliche Varianz unter Berücksichtigung der maximalen Dopplerfrequenz, was für einen Empfang mit mobilen Empfängern wichtig ist. Außerdem kann Diversität für Synchronisationsschemata, beispielsweise eine Trägerversatzschätzung (carrier offset estimation), verwendet werden, welche mit einer hohen Genauigkeit selbst bei geringem oder negativem Signal/Rausch-Verhältnis betrieben werden können.

Ein üblicherweise verwendetes Diversitätsverfahren ist beispielsweise die Frequenzdiversität. Dabei werden Informationen bzw. Daten auf verschiedenen Trägerfrequenzen übertragen. Um unabhängige Kanäle sicherzustellen, muss die Trägerbeabstandung dabei die Kohärenzbandbreite überschreiten. Ein anderes Diversitätsverfahren ist die Zeitdiversität. Diese beruht auf der Übertragung von Informationen verteilt auf verschiedene Zeitschlitze. Dies kann beispielsweise durch Verwendung einer Verschachtelung (Interleaving) in Verbindung mit einer Codierung erzielt werden. Jedoch ist für eine tiefe Verschachtelung ein hoher Implementierungsaufwand erforderlich, so dass dieses Verfahren für Anwendungen mit einer beschränkt zulässigen Verzögerung nicht geeignet ist. Als weiteres übliches Diversitätsverfahren ist eine räumliche Diversität bzw. Antennen-Diversität bekannt. Bei der räumlichen Diversität wird eine Vielzahl von Antennen senderseitig und/oder empfängerseitig verwendet. Um unabhängige Kanäle sicherzustellen, müssen die Antennen um mehrere Wellenlängen von einander beabstandet werden.

Das erforderliche Kombinieren der Information von zwei oder mehr Empfängerzweigen kann hinsichtlich des Kombinationsortes und des Kombinationsverfahrens unterschieden werden. Beispielsweise kann unterschieden werden zwischen einer Kombination vor der Erfassung, d. h. vor der Demodulation eines empfangenen Signals, und einer Kombination nach der Erfassung, d. h. nach der Demodulation. Bei OFDM-Systemen (OFDM: Orthogonal Frequency Division Multiplex) wird eine Kombination nach der Erfassung meist entweder direkt nach einer Fouriertransformation, insbesondere schnellen Fouriertransformation, vor dem Entzerrer (equalizer) oder nach einer softwaregestützten Kombination (soft decision), d. h. nach der Rückabbildung (demapping), durchgeführt.

Außerdem kann unterschieden werden zwischen einer Auswahlkombination, einer Kombination mit gleicher Verstärkung und einer Maximalverhältniskombination. Bei der Auswahlkombination (selection combining) wird einfach der Zweig bzw. Weg mit dem höchsten Signal/Rausch-Verhältnis ausgewählt. Die Implementierung ist sehr effizient. Jedoch wird die Information all der anderen Kanäle fallengelassen.

Bei der Kombination mit gleicher Verstärkung (equal gain combining) werden die Signale mit allen Wichtungen der Zweige auf ein Einheitsmaß gesetzt und addiert. Diese Diversitätstechnik ist einfacher als die Maximalverhältniskombination. Jedoch führt sie zu einer suboptimalen Leistungsfähigkeit. Die Maximalverhältniskombination (Maximum Ratio Combining, MRC) verwendet räumliche Kombinationswichtungen, welche zum Maximieren des Signal/Rausch-Verhältnisses des Ausgabesignals gewählt werden.

Um ein maximales Signal/Rausch-Verhältnis zu erzielen, müssen die Diversitätszweige in einem Maximum Ratio-Kombinierer mit deren entsprechenden Fading-Amplituden gewichtet werden und die Phasenverschiebung des Kanals muss kompensiert werden. Die daraus resultierende Summe muss normiert werden, was zu dem folgenden MRC-Ausgabewert führt:

$$MRC = (a_1 R_1 e^{j\Phi 1} + a_2 R_2 e^{j\Phi 2}) / (a_1{}^2 + a_2{}^2)$$

mit $a_k$ als Amplitude und $\Phi_k$ als Phase der Kanalübertragungsfunktion des Zweiges k bei dem momentan empfangenen Träger R.

Allgemein bekannt sind derartige Verfahren beispielsweise aus EP 1 125 377 mit Blick auf eine MRC-Kombinierung für OFDM-Systeme bei einem digitalen Fernsehsystem (DVB-T: Terrestrial Digital Video Broadcasting). Dabei wird jedoch ein Verfahren unter Verwendung einer Wichtung, Addition und Division durchgeführt. Interferenz wird nicht berücksichtigt. Lediglich die Kanalübertragungsfunktion und/oder Softinformation wird verwendet. Aus US 6,151,372 ist ein Verfahren bekannt, bei welchem Wichtungs-, Additions- und Divisionsprozesse verwendet werden, wobei eine orthogonale Detektion mit getrennten Analog/Digital-Wandlern für die I- und die Q-Komponente verwendet wird.

Die Diversitätsverfahren sind jedoch nachteilhaft. Bei einer Kombination vor der Fouriertransformation ist eine Optimierung für jeden Träger nicht möglich. Bei einer softwaregestützten Kombination ist die Verwendung von CSI (Channel State Information/Kanalzustandsinformation) bei diesem Schritt nicht mehr möglich. Bei einer trägerbasierten Kombination werden übliche Wichtungs-, Additions- und Divisionsverfahren verwendet, was einen komplexen Aufwand verursacht. Außerdem kann eine Interferenzinformation nicht verwendet werden. Soweit bei solchen Verfahren ein Rauschpegel berücksichtigt wird, wird dieser für alle Träger als konstant angenommen.

Die Aufgabe der Erfindung besteht darin, ein alternatives Verfahren zum Verarbeiten von Daten vorzuschlagen, insbesondere von Daten, welche über eine Funkschnittstelle über verschiedene Kanäle übertragen wurden.

Diese Aufgabe wird durch das Verfahren mit den Merkmalen des Patentanspruchs 1 bzw. durch die Vorrichtung mit den Merkmalen des Patentanspruchs 12 gelöst.

Vorteilhaft ist demgemäss ein Verfahren zum Verarbeiten empfangener Daten insbesondere einer Funkschnittstelle, wobei die empfangenen Daten aus einer Folge aus Daten bestehen, die insbesondere zur Fehlerreduzierung über verschiedene Zweige eines Trägers der Funkschnittstelle übertragen wurden und unter Fehlerreduzierung zu einer auszugebenden Folge aus Daten zu kombinieren sind, wobei das Kombinieren auf Basis von Trägerinformationen in Verbindung mit Störinformationen der verschiedenen Zweige relativ zueinander durchgeführt wird.

Vorteilhaft ist demgemäss eine Vorrichtung zum Verarbeiten empfangener Daten einer Funkschnittstelle mit einem Mischer zum Kombinieren von Daten einer Datenfolge, welche über verschiedene Zweige eines Trägers übertragen wurden, auf Basis einer Störinformation und einer Mischsignal-Bereitstellungseinrichtung zum Bereitstellen der Störinformation als ein Mischsignal, wobei die Störinformation gebildet wird aus Störinformationsanteilen der verschiedenen Zweige.

Verfahrens- und vorrichtungsgemäß wird somit eine Störinformation verwendet, die jeweils auf Trägerbasis berücksichtigt wird. Somit wird beispielsweise der Rauschpegel nicht mehr für alle Träger als konstant angenommen, sondern trägerindividuell bestimmt und berücksichtigt.

Vorteilhafte Ausgestaltungen sind Gegenstand abhängiger Ansprüche.

Vorteilhaft ist demgemäss insbesondere ein Verfahren, bei dem eine Maximalverhältniskombination durchgeführt wird, bei welcher die Amplituden der Zweige der Trägerinformation abhängig von den Störinformationen der Zweige kombiniert werden.

Vorteilhaft ist demgemäss insbesondere ein Verfahren, bei dem das Kombinieren durch Mischen der Trägerinformation anhand von den Störinformationen der verschiedenen Zweige relativ zueinander gewichtet durchgeführt wird.

Vorteilhaft ist demgemäss insbesondere ein Verfahren, bei dem die Störinformationen aus Signal-zu-Interferenz-Verhältnissen und/oder Signal-zu-Rausch-Verhältnissen der einzelnen Zweige bestimmt werden. Unter Störinformationen werden somit Rauschen und Interferenzen alleine oder in Kombination berücksichtigt.

Vorteilhaft ist demgemäss insbesondere ein Verfahren, bei dem eine Störinformation mittels einer Division von Störinformationsanteilen verschiedener der Zweige gebildet wird, insbesondere gebildet wird gemäß

$$\text{MIX} = \text{SINR2}/(\text{SINR1}+\text{SINR2}).$$

Vorteilhaft ist demgemäss insbesondere ein Verfahren, bei dem eine Störinformation mittels einer approximierten Division von Störinformationsanteilen verschiedener der Zweige gebildet wird, insbesondere gebildet wird gemäß

$$\text{MIX} = (X/2^{x0}) * (2 - ((X + Y)/2^{x0}))$$

mit x0 als der nächsten Potenz von 2 und X, Y als den Störinformationsanteilen der verschiedenen Zweige.

Besonders vorteilhaft ist demgemäss nicht nur die Anwendung einer exakten Division sondern insbesondere die Vermeidung einer exakten Division, welche bei der Reihenfolge Gewichten, Addieren, Dividieren erforderlich wäre oder zumindest als zweckmäßig gemäß bisher bekannten Möglichkeiten anzusehen wäre. Vorteilhafterweise kann ein Mischerfaktor als die Störinformation jedoch mit einer approximierten Division geringerer Genauigkeit berechnet werden, ohne die Signalqualität zu verschlechtern.

Vorteilhaft ist demgemäss insbesondere ein Verfahren, bei dem die Amplituden der Zweige der Trägerinformation bestimmt werden durch eine Phasenkorrektur und eine Division durch einen Amplitudenwert des jeweiligen Zweiges, insbesondere bestimmt werden gemäß

$$R_{eq,\,k} = R_k e^{j\Phi k} / a_k.$$

Vorteilhaft ist demgemäss insbesondere ein Verfahren, bei dem die Störinformation eines Zweiges bestimmt wird durch eine Division der Amplitude oder des Amplitudenquadrats des Zweiges durch die Störanteile des Zweiges, insbesondere durch die Summe aus Rauschleistungspegel und Interferenzleistungspegel gemäß

$$SINR_k = a_k^2 / (N_k + I_k).$$

Vorteilhaft ist demgemäss insbesondere ein Verfahren, bei dem die Zweige durch verschiedene Signallaufwege und/oder verschiedene verwendete Kanäle einer einzelnen Folge der empfangenen Daten gebildet werden.

Vorteilhaft ist demgemäss insbesondere ein Verfahren, bei dem das Kombinieren nach einem Equalizing bzw. Entzerren durchgeführt wird, wobei die Folge aus Daten unter Verwendung der jeweiligen Kanalübertragungsfunktion bzw. Kanalzustandsinformation vorher vorzugsweise bereits normiert wird.

Vorteilhaft ist demgemäss insbesondere ein Verfahren, bei dem zum Bestimmen einer Störinformation eine Interferenzleistung durch trägerbasierte Messungen der mittleren Leistung eines Trägers, durch Verwendung einer zeitlichen Ableitung einer Kanalzustandsinformation des Trägers und/oder durch eine Schätzung gesendeter Daten bestimmt wird.

Vorteilhaft ist demgemäss insbesondere eine Vorrichtung, bei der die Mischsignal-Bereitstellungseinrichtung eine Divisionseinrichtung zum Dividieren der Störinformationsanteile der verschiedenen Zweige aufweist.

Vorteilhaft ist demgemäss insbesondere eine Vorrichtung, welche zum Durchführen eines solchen Verfahrens ausgebildet und gesteuert ist.

Ausführungsbeispiele der Erfindung werden nachfolgend anhand der Zeichnung näher erläutert. Es zeigen:

Fig. 1    ein erstes Ausführungsbeispiel mit einem Diversitätsempfänger, der Signale über eine Vielzahl von Antennen empfängt;

Fig. 2    ein zweites Ausführungsbeispiel mit dem Aufbau eines MRC-Kombinierers unter Verwendung von CSI;

Fig. 3    ein drittes Ausführungsbeispiel mit einem MRCKombinierer unter Verwendung von SINR (Signal to Interference and Noise Relation/Signal zu Interferenz und Rausch-Verhältnis); und

Fig. 4    ein viertes Ausführungsbeispiel mit einer Kombination unter Verwendung einer Mischeranordnung.

Die Ausführungsbeispiele beruhen auf einem einfachen Aufbau mit einem Kombinierer unter Verwendung einer Mischeranordnung, wobei eine Approximation für die Division verwendet wird. Vorzugsweise wird eine optimale Leistungsfähigkeit geboten auf Basis einer trägerbasierten Verarbeitung, einer Kombination mit einem richtigen Maximalverhältnis und der Verwendung einer Interferenzinformation.

Beschrieben werden modifizierte MRC-Empfänger, welche ein Übersprechen (cross talk) einer Nachbar-/Zwischenkanal-Interferenz (ICI - Inter Carrier Interference) als fequenzselektives Rauschen modelliert und die Diversitätspfade entsprechend wichtet. Vorzugsweise ist eine solche MRC-Modifikation verwendbar für alle Arten frequenzselektiven Rauschens bzw. frequenzselektiver Interferenz. Beispielsweise können auch Langzeitmessungen von Interferenz auf einem Datenträger für eine derart verbesserte Maximalverhältniskombination (MRC) verwendet werden.

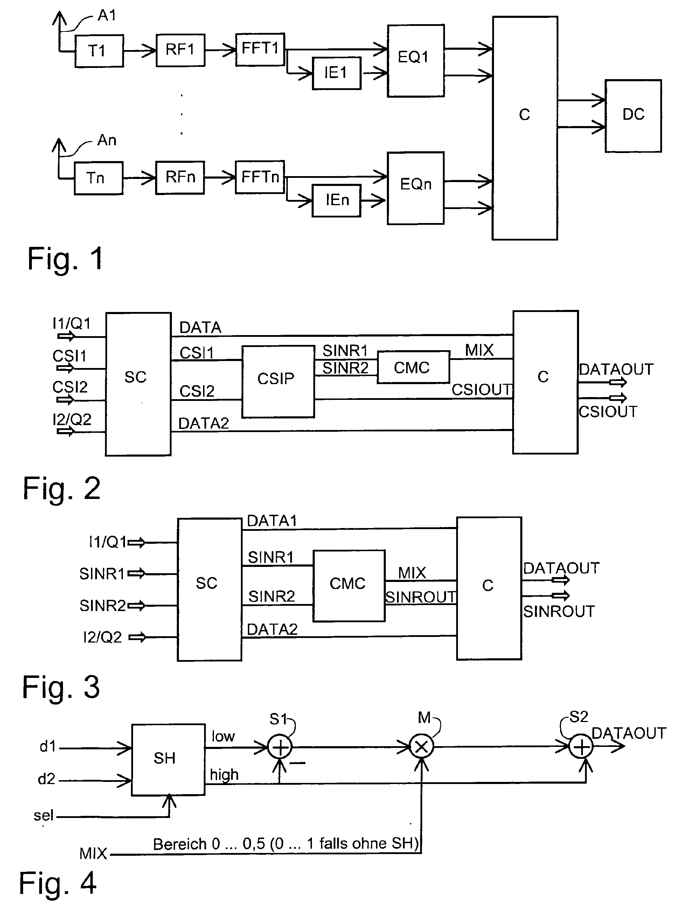

Fig. 1 stellt einen Diversitätsempfänger bzw. einzelne Komponenten einer Vielzahl von Komponenten eines solchen Empfängers dar. Der Empfänger empfängt Signale über eine Vielzahl von Antennen A1, ..., An. An jeder Antenne A1, ..., An ist jeweils ein eigener Tuner T1, ..., Tn angeschlossen, dem das entsprechende Eingabesignal zugeführt wird. Jedem der Tuner T1, ..., Tn ist eine analoge und digitale Empfängervorstufe RSI, ..., RSn nachgeschaltet. Jeder der Empfänger-Vorstufen RS1, ..., RSn ist eine Schaltung zur Durchführung einer Fouriertransformation FFT1, ..., FFTn nachgeschaltet. Der Ausgang jeder der Schaltungen zum Durchführen der Fouriertransformation FFT1, ..., FFTn ist sowohl mit einer Entzerrer-Schaltung (equalizer) EQ1, ..., EQn als auch einer Schaltung zur Kanal- und Rauschsowie Interferenzschätzung IE1, ..., IEn verbunden. In für sich bekannter Art und Weise weist jede der Entzerrer-Schaltungen EQ1, ..., EQn zwei Ausgänge auf, welche einem Kombinierer C angelegt sind. Diesem Kombinierer sind dabei nicht nur die Ausgänge des ersten Entzerrers EQ1 sondern auch die Ausgänge der weiteren Entzerrer EQn angeschlossen. Dadurch kann der Kombinierer C eine gemeinsame Verarbeitung der von den Entzerrern EQ1, ..., EQn angelegten Daten durchführen. Ausgegeben werden die Daten des Kombinierers C zur weiteren Verarbeitung, insbesondere an eine Schaltung zum Rückabbilden (demapping) und Kanaldecodieren.

Das Beispiel von Fig. 1 zeigt somit eine beispielhafte Ausführungsform mit einer Mischung nach der Fourier-Transformation, wobei ein erforderlicher Puffer unter Verwendung des Ausgangspuffers der Fourier-Transformation vorteilhaft minimierbar ist.

Fig. 2 stellt eine Struktur eines bevorzugten MRC-Kombinierers dar, wobei eine Kanalzustandsinformation CSI (Channel State Information) am Beispiel von zwei Eingangszweigen verwendet wird. Natürlich ist eine Erweiterung auf mehr als zwei Eingangszweige möglich. Eine Synchronisierungsschaltung SC weist entsprechend verschiedene Eingänge auf. Pro Signalquelle werden jeweils eine Kanalzustandsinformation CSI1 bzw. CSI2 und ein eigentliches Signal bzw. Signalverhältnis I1/Q1 bzw. I2/Q2 in die Synchronisierungsschaltung SC eingeführt. Die Synchronisierungsschaltung SC gibt zwei Datenströme DATA1, DATA2 aus, die einer Kombiniererschaltung bzw. einem Kombinierer C zugeführt werden. Außerdem werden zwei Kanalzustandsinformationen CSI1 bzw. CSI2 einer Kanalzustandsinformations-Verarbeitungsschaltung CSIP zur Verarbeitung der Kanalzustandsinformationen CSI1, CSI2 zugeführt. Diese werden gemeinsam verarbeitet. Ausgegeben werden von der Kanalzustandsinformationsschaltung CSIP zwei Signale SINR1, SINR2 mit Informationen bezüglich der Signal/Rausch-Verhältnisse der beiden Eingangssignale. Diese beiden Signale SINR1, SINR2 werden einer Kalkulation für Mischkoeffizienten zugeführt, welche ein Mischsignal MIX ausgibt und dem Kombinierer C zuführt. Die Kanalzustandsinformationsschaltung CSIP gibt außerdem eine Kanalzustandsinformation CSIOUT direkt an den Kombinierer C aus. Der Kombinierer führt eine kombinierte Berechnung durch und gibt letztendlich eine Folge von Datenwerten DATAOUT und entsprechende Kanalzustandsinformationen CSIOUT aus.

Fig. 3 stellt die Struktur eines MRC-Kombinierers unter Verwendung des Signal zu Interferenz- und Rausch-Verhältnisses SINR am Beispiel zweier Eingangszweige bzw. Signalfolgen zweier Signalsquellen dar. Unter Signalquellen sind dabei ggf. auch Datenfolgen einer einzigen Signalquelle zu verstehen, welche über verschiedene Signalwege bzw. Signalzweige zum Empfänger gelaufen sind, wobei dies auch für die weiteren Ausführungsbeispiele gilt.

Einer Synchronisierungsschaltung SC werden entsprechend pro Signalquelle ein SINR-Signal SINR1 bzw. SINR2 und außerdem ein eigentliches Signal bzw. Signalverhältnis I1/Q1 bzw. I2/Q2 zugeführt. Nach einer entsprechenden Datenverarbeitung werden von der Synchronisierungsschaltung SC zwei entsprechende Folgen von Daten DATA1, DATA2 an einen Kombinierer C geleitet. Außerdem gibt die Synchronisierungsschaltung zwei SINR-Signale bzw. Datenfolgen SINR1, SINR2 an eine Schaltung CMC zur Kalkulation von Mischkoeffizienten als einer Mischsignal-Bereitstellungseinrichtung aus. Diese berechnet ein Mischsignal MIX und ein gemeinsames SINR-Signal SINROUT und gibt diese an den Kombinierer C aus. Der Kombinierer C berechnet wiederum eine eigentliche Folge aus Daten DATAOUT und ein entsprechendes SINR und entsprechend ein Signal bzw. eine Datenfolge SINROUT mit einem zugeordneten SINR.

Fig. 4 zeigt eine beispielhafte Mischeranordnung für eine Kombination. Zwei Folgen aus Daten d1, d2 werden einer Umstellungsschaltung SH (shuffle) zugeführt, welcher außerdem ein entsprechendes Auswahlsignal sel angelegt wird. Diese Umstellungsschaltung ist dabei als eine optionale Komponente anzusehen. Ausgegeben werden von dieser Umstellungsschaltung Signale bzw. Datenfolgen in den Zuständen tief (low) und hoch (high) über zwei entsprechende Leitungen. In einer ersten Additions- bzw. Subtraktionseinrichtung S1 werden die Daten im hohen Zustand von entsprechenden Daten im tiefen Zustand subtrahiert. Das Subtraktionsergebnis wird einem Multiplizierer M zugeführt, an dessen weiterem Eingang das Mischsignal MIX angelegt wird. Im Fall der Verwendung der Umstellungsschaltung SH liegen die Werte des Mischsignals MIX im Bereich von 0 bis 0,5. Anderenfalls liegen die Werte im Bereich von 0 bis 1. Mittels einer zweiten Additionsschaltung S2 werden auf das derart multiplizierte bzw. gemischte Signal die entsprechenden Daten im hohen Zustand aufaddiert. Das Additionsergebnis bildet die auszugebenden Daten DATAOUT.

Mit Blick auf die Struktur des Kombinierers C und dessen Steuerung wird der nachfolgende Zusammenhang berücksichtigt. Bei der Maximalverhältniskombination wird in üblicher Art und Weise eine Wichtung der Eingangszweige, Addierung und Normierung vorgenommen, so dass gilt:

$$MRC = (a_1 R_1 e^{j\Phi 1} + a_2 R_2 e^{j\Phi 2}) / (_{a1}{}^2 + a_2{}^2).$$

Dies kann umgeschrieben werden für die entzerrten Träger unter Verwendung des Signal-zu-Interferenz- und Rausch-Verhältnisses SINR für die einzelnen Zweige bzw. Signalquellen zu

$$MRC = (SINR_1 R_{eq,1} + SINR_2 R_{eq,2}) / (SINR_1 + SINR_2) = R_{eq,1} \text{-mix*} (R_{eq,1} - R_{eq,2})$$

mit

$$R_{eq,k} = R_k e^{j\Phi k} / a_k$$

und

$$SINR_k = a_k^2 / (N_k + I_k).$$

Die Indices geben dabei die Zuordnung zu den verschiedenen Eingangszweigen bzw. Signalquellen an. Die Variable $a_k$ steht wieder für die Amplitude und $\Phi_k$ für die Phase der Kanalübertragungsfunktion des entsprechenden Zweiges k des momentan betrachteten empfangenen Trägers R. Außerdem gibt $R_{eq,k}$ den entsprechenden Wert für den Träger nach der Entzerrung bzw. Equalization an. Die Umstellung führt somit zu einer einfachen Mischstruktur, welche lediglich zwei Additionen und eine Multiplikation erforderlich macht.

Die Erzeugung des Signal-zu-Interferenz- und Rausch-Verhältnisses SINR kann auf verschiedene Art und Weise durchgeführt werden. Gemäß einem grundlegenden Ansatz kann das Verhältnis direkt durch Kombination zu einem Signal-zu-Rausch- und Interferenz-Verhältnis (SINR)=$A^2$/(N+I) kombiniert werden, wobei A für die momentane Amplitude, N für den momentanen Rauschgehalt und I für die momentane Interferenzleistung steht. Gemäß einem zweiten Ansatz kann eine Kanalzustandsinformation CSI aus den getrennten Werten bestimmt werden, und zwar aus der Amplitude A der Kanalübertragungsfunktion, dem Rauschleistungspegel N, dem gemessenen Interferenzleistungspegel I und der Zeitableitung des CTF (Contrast Transfer Function) für den ICI-Pegel.

Der erforderliche Mischwert MIX für die Kombination aus zwei Zweigen wird dann abgeleitet zu

$$MIX = SINR2/(SINR1+SINR2) = X/Y.$$

Angemerkt wird, dass diese Division im Gegensatz zum konventionellen Ansatz nicht Bestandteil der Kanalentzerrung (Channel Equalization) ist. Die Genauigkeitsanforderungen sind daher sehr viel geringer.

Für eine effiziente Implementierung kann diese Division daher angenähert werden, beispielsweise gemäß:

$$MIX = (X/2^{x0}) * (2-((X+Y)/2^{x0}))$$

mit x0 als der nächstgelegensten Potenz von 2.

Gemäß alternativer Realisierungsmöglichkeiten besteht eine Vielzahl von Varianten zu den beschriebenen Ausführungsbeispielen. Beispielsweise ist eine Umsetzung ohne die Verwendung einer Interferenzinformation möglich. Auch eine Übertragung auf den Einsatz mit mehr als zwei Empfängern bzw. Empfangszweigen ist möglich. Dies gilt insbesondere bei Verwendung eines Prioritätsverkettungsansatzes. Möglich ist die Synchronisierung zwischen den Eingangszweigen an verschiedenen Stellen innerhalb der Schaltungsanordnungen. Die Kalkulation des Mischwertes kann auch unter Verwendung einer anderen Division, d. h. präziser oder lediglich weniger genau angenähert durchgeführt werden.

**Patentansprüche**

1. Verfahren zum Verarbeiten empfangener Daten (I1/Q1, I2/Q2; d1, d2) einer Funkschnittstelle, wobei

   - die empfangenen Daten aus einer Folge aus Daten bestehen, die insbesondere zur Fehlerreduzierung über verschiedene Zweige eines Trägers ($R_k$) der Funkschnittstelle übertragen wurden und unter Fehlerreduzierung zu einer auszugebenden Folge aus Daten (DATAOUT) zu kombinieren sind,

   **dadurch gekennzeichnet, dass**

   - das Kombinieren auf Basis von Trägerinformationen ($R_{eq,k}$) in Verbindung mit Störinformationen (MIX, SINR1, SINR2; $SINR_k$) der verschiedenen Zweige (k) relativ zueinander durchgeführt wird.

2. Verfahren nach Anspruch 1, bei dem eine Maximalverhältniskombination (MRC) durchgeführt wird, bei welcher die Amplituden der Zweige der Trägerinformation ($R_{eq,1}$, $R_{eq,2}$) abhängig von den Störinformationen (MIX, SINR1, SINR2) der Zweige (k) kombiniert werden.

3. Verfahren nach Anspruch 1 oder 2, bei dem das Kombinieren durch Mischen der Trägerinformation anhand von den Störinformationen (MIX, SINR1, SINR2) der verschiedenen Zweige (k) relativ zueinander gewichtet durchgeführt wird.

**4.** Verfahren nach einem vorstehenden Anspruch, bei dem die Störinformationen (MIX) aus Signal-zu-Interferenz-Verhältnissen und/oder Signal-zu-Rausch-Verhältnissen (SINR1, SINR2) der einzelnen Zweige (k) bestimmt werden.

**5.** Verfahren nach einem vorstehenden Anspruch, bei dem eine Störinformation (MIX) mittels einer Division von Störinformationsanteilen (SINR1, SINR2) verschiedener der Zweige (k) gebildet wird, insbesondere gebildet wird gemäß

$$MIX = SINR2/(SINR1+SINR2).$$

**6.** Verfahren nach einem vorstehenden Anspruch, bei dem eine Störinformation (MIX) mittels einer approximierten Division von Störinformationsanteilen (SINR1, SINR2) verschiedener der Zweige (k) gebildet wird, insbesondere gebildet wird gemäß

$$MIX = (X/2^{x0}) * (2- ((X+Y) /2^{x0}))$$

mit x0 als der nächsten Potenz von 2 und X, Y als den Störinformationsanteilen der verschiedenen Zweige.

**7.** Verfahren nach einem vorstehenden Anspruch, bei dem die Amplituden der Zweige (k) der Trägerinformation ($R_{eq,1}$, $R_{eq,2}$) bestimmt werden durch eine Phasenkorrektur und eine Division durch einen Amplitudenwert des jeweiligen Zweiges (k), insbesondere bestimmt werden gemäß

$$R_{eq,k} = R_k e^{j\Phi k} / a_k.$$

**8.** Verfahren nach einem vorstehenden Anspruch, bei dem die Störinformation ($SINR_k$) eines Zweiges (k) bestimmt wird durch eine Division der Amplitude oder des Amplitudenquadrats ($a_k^2$) des Zweiges (k) durch die Störanteile des Zweiges, insbesondere durch die Summe aus Rauschleistungspegel ($N_k$) und Interferenzleistungspegel ($I_k$) gemäß

$$SINR_k = a_k^2 / (N_k+I_k) .$$

**9.** Verfahren nach einem vorstehenden Anspruch, bei dem die Zweige (k) durch verschiedene Signallaufwege und/oder verschiedene verwendete Kanäle einer einzelnen Folge der empfangenen Daten gebildet werden.

**10.** Verfahren nach einem vorstehenden Anspruch, bei dem das Kombinieren nach einem Equalizing durchgeführt wird, wobei die Folge aus Daten vorzugsweise unter Verwendung einer jeweiligen Kanalinformation, insbesondere Kanalübertragungsfunktion oder Kanalzustandsinformation normiert wird.

**11.** Verfahren nach einem vorstehenden Anspruch, bei dem zum Bestimmen einer Störinformation eine Interferenzleistung (I) durch trägerbasierte Messungen der mittleren Leistung eines Trägers, durch Verwendung einer zeitlichen Ableitung einer Kanalzustandsinformation des Trägers und/oder durch eine Schätzung gesendeter Daten bestimmt wird.

**12.** Vorrichtung zum Verarbeiten empfangener Daten einer Funkschnittstelle mit

- einem Mischer (MC) zum Kombinieren von Daten einer Datenfolge, welche über verschiedene Zweige (k) eines Trägers ($R_k$) übertragen wurden, auf Basis einer Störinformation (MIX), und
- einer Mischsignal-Bereitstellungseinrichtung (CMC) zum Bereitstellen der Störinformation (MIX) als ein Mischsignal, wobei die Störinformation gebildet wird aus Störinformationsanteilen (SINR1, SINR2) der verschiedenen Zweige (k).

**13.** Vorrichtung nach Anspruch 12, bei der die Mischsignal-Bereitstellungseinrichtung (CMC) eine Divisionseinrichtung zum Dividieren der Störinformationsanteile (SINR1, SINR2) der verschiedenen Zweige (k) aufweist.

14. Vorrichtung nach Anspruch 12 oder 13, welche zum Durchführen eines Verfahrens nach einem der Ansprüche 1 bis 11 ausgebildet und gesteuert ist.

Fig. 1

Fig. 2

Fig. 3

Fig. 4

**Europäisches Patentamt**

## EUROPÄISCHER RECHERCHENBERICHT

Nummer der Anmeldung

EP 05 00 8724

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 835 985 A (DIBCOM) 15. August 2003 (2003-08-15) * Seite 5, Zeile 1 - Seite 6, Zeile 30; Anspruch 1; Abbildung 1 * ----- | 1-4,10, 12 | H04B7/08 |
| X | EP 1 276 251 A (SONY INTERNATIONAL GMBH) 15. Januar 2003 (2003-01-15) * Absatz [0066] - Absatz [0071]; Abbildung 1 * ----- | 1-3 | |
| X | US 5 761 613 A (SAUNDERS ET AL) 2. Juni 1998 (1998-06-02) * Spalte 2, Zeile 9 - Zeile 18 * * Spalte 2, Zeile 52 - Zeile 67; Abbildung 1 * ----- | 1-4 | |
| X | US 5 905 467 A (NARAYANASWAMY ET AL) 18. Mai 1999 (1999-05-18) * Spalte 4, Zeile 57 - Zeile 67; Abbildung 4C * ----- | 1-4 | |
| X | US 5 933 466 A (OSHIMA ET AL) 3. August 1999 (1999-08-03) * Spalte 3, Zeile 29 - Spalte 5, Zeile 67; Abbildung 2 * ----- | 1-4 | RECHERCHIERTE SACHGEBIETE (Int.Cl.7) H04B |
| P,X | WO 2004/100432 A (ZYRAY WIRELESS, INC; CATREUX, SEVERINE; ERCEG, VINKO; ROUX, PIETER, W;) 18. November 2004 (2004-11-18) * Seite 16, Zeile 9 - Seite 18, Zeile 7; Abbildung 3 * ----- | 1-4 | |

Der vorliegende Recherchenbericht wurde für alle Patentansprüche erstellt

| Recherchenort | Abschlußdatum der Recherche | Prüfer |
|---|---|---|
| München | 16. September 2005 | Burghardt, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 05 00 8724

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-09-2005

| Im Recherchenbericht angeführtes Patentdokument | Datum der Veröffentlichung | Mitglied(er) der Patentfamilie | Datum der Veröffentlichung |
|---|---|---|---|
| FR 2835985 A | 15-08-2003 | AT 298477 T<br>AU 2003219271 A1<br>CN 1643814 A<br>DE 60300886 D1<br>EP 1474877 A1<br>WO 03069802 A1 | 15-07-2005<br>04-09-2003<br>20-07-2005<br>28-07-2005<br>10-11-2004<br>21-08-2003 |
| EP 1276251 A | 15-01-2003 | KEINE | |
| US 5761613 A | 02-06-1998 | EP 0742975 A1<br>WO 9617445 A1<br>JP 9509032 T | 20-11-1996<br>06-06-1996<br>09-09-1997 |
| US 5905467 A | 18-05-1999 | KEINE | |
| US 5933466 A | 03-08-1999 | AU 695952 B2<br>CN 1168577 A | 27-08-1998<br>24-12-1997 |
| WO 2004100432 A | 18-11-2004 | KEINE | |

EPO FORM P0461

Für nähere Einzelheiten zu diesem Anhang : siehe Amtsblatt des Europäischen Patentamts, Nr.12/82